# EUROPEAN PATENT APPLICATION

(11) **EP 4 414 406 A1**
(43) Date of publication of application: **14.08.2024**
(21) Application number: 22878501.0
(22) Date of filing: 04.10.2022
(51) Int. Cl.: C08G 63/199, C08G 63/83, C08L 67/02, G02B 1/04

(54) **POLYESTER RESIN AND METHOD FOR PRODUCING SAME, AND RESIN COMPOSITION, MOLDED BODY, AND OPTICAL MEMBER**

(30) Priority: 05.10.2021 JP 2021164109
(71) Applicant: MITSUBISHI GAS CHEMICAL COMPANY, INC., Chiyoda-ku Tokyo 100-8324 (JP)
(72) Inventor: HIRAKAWA, Manabu, Tokyo 125-8601 (JP); HONDA, Eiichi, Tokyo 100-8324 (JP); YOSHIMURA, Yasuaki, Hiratsuka-shi, Kanagawa 254-0016 (JP); SATAKE, Yuichiro, Tokyo 125-8601 (JP)
(74) Representative: Vossius & Partner Patentanwälte Rechtsanwälte mbB
(86) International application number: PCT/JP2022/037066
(87) International publication number: WO 2023/058632

(57) **Abstract**

A polyester resin including a unit derived from dicarboxylate (A) represented by the following formula (1), a unit derived from a diol having a cyclic structure (B) and a unit derived from a diol having a linear alkyl structure (C), wherein the polyester resin has a molecular weight dispersity (Mw/Mn, where Mw represents the weight average molecular weight and Mn represents the number average molecular weight) of 2.3 to 2.5. 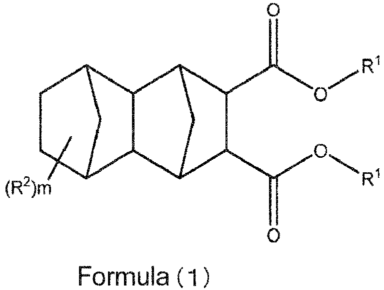 (in the formula (1), R¹ represents an alkyl group having 1 to 3 carbon atoms, R² represents an alkyl group having 4 to 8 carbon atoms, and m represents an integer of 0 to 8).

## Description

### Technical Field

The present invention relates to a polyester resin, a method for producing the same, a resin composition, a molded article and an optical member.

### Background Art

Polyethylene terephthalate (hereinafter may be referred to as "PET") is a polyester resin widely used for films, sheets, hollow containers and the like, because it has excellent transparency, mechanical strength, melt stability, solvent resistance, aroma retention, and recyclability. However, the glass transition temperature of PET is not necessarily sufficiently high, and its crystallizability can impair transparency when thick-walled molded articles are prepared, and thus PET has been widely modified by copolymerization.

In order to improve properties of PET, technologies using, for example, a norbornene diol derivative (NBDM) having a specific structure as a dicarboxylic acid have been disclosed (see, for example, Patent Documents 1 to 4) .

### Citation List

### Patent Literature

Patent Literature 1: Japanese Patent Laid-Open No. 02-253201
Patent Literature 2: Japanese Patent Laid-Open No. 03-200830
Patent Literature 3: Japanese Patent Laid-Open No. 05-005026
Patent Literature 4: Japanese Patent Laid-Open No. 05-017560

### Summary of Invention

### Technical Problem

NBDM is easy to manufacture and is expected to be used as a raw material for optical resin taking advantage of its structure. However, NBDM tends to have low polymerization reactivity in the reaction to form polyester, and thus its use is limited. For example, when the molecular weight of polyester prepared by using NBDM is increased to improve mechanical properties such as heat resistance and strength, it is necessary to increase the amount of catalyst for transesterification and to tighten the reaction conditions, and this has led to the problem of reduced formability (flowability) and resin coloration.

To solve the above problem, an object of the present invention is to provide a polyester resin which can achieve both excellent mechanical properties and formability, a method for producing the same, a resin composition, a molded article and an optical member.

### Solution to Problem

<1> A polyester resin comprising:
   a unit derived from dicarboxylate (A) represented by the following formula (1),
   a unit derived from a diol having a cyclic structure (B), and
   a unit derived from a diol having a linear alkyl structure (C),
   wherein the polyester resin has a molecular weight dispersity (Mw/Mn, where Mw represents the weight average molecular weight and Mn represents the number average molecular weight) of 2.3 to 2.5: 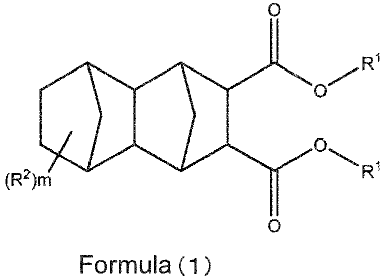 wherein R¹ represents an alkyl group having 1 to 3 carbon atoms, R² represents an alkyl group having 1 to 8 carbon atoms, and m represents an integer of 0 to 8.
<2> The polyester resin according to <1> above, wherein the polyester resin has a weight average molecular weight of 45,000 to 80,000.
<3> The polyester resin according to <1> or <2> above, wherein the polyester resin has a melt volume flow rate (MVR) of 20 to 60 cm³/10 minute.
<4> The polyester resin according to any of <1> to <3> above, wherein the polyester resin has a bending strength of 75 MPa or more.
<5> The polyester resin according to any of <1> to <4> above, wherein the polyester resin has a flexural modulus of 3,000 MPa or more.
<6> The polyester resin according to any of <1> to <5> above, wherein, in the unit derived from a diol having a cyclic structure (B), the cyclic structure is a polycyclic structure and each of the two hydroxy groups is bonded to a different ring.
<7> The polyester resin according to <6> above, wherein the unit derived from a diol having a cyclic structure (B) is derived from a diol represented by at least one selected from the following formula (A-1) and the following formula (A-2): 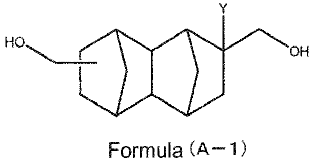 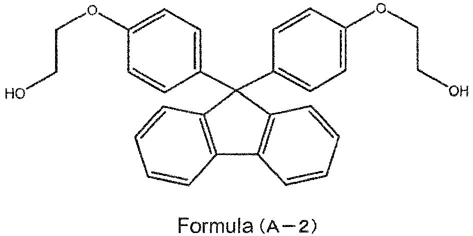 wherein in the formula (A-1), Y is H, CH₃ or C₂H₅.
<8> The polyester resin according to any of <1> to <5> above, wherein, in the unit derived from a diol having a cyclic structure (B), the cyclic structure is a monocyclic structure and each of the two hydroxy groups is bonded to a non-adjacent carbon atom.
<9> The polyester resin according to any of <1> to <8> above, wherein, in the unit derived from a diol having a linear alkyl structure (C), the alkyl structure is a linear alkyl structure having 2 to 6 carbon atoms.
<10> A method for producing a polyester resin according to any of <1> to <9> above, using a dicarboxylate (A1) represented by the following formula (1), a diol having a cyclic structure (B1) and a diol having a linear alkyl structure (C1),
   the method comprising at least a transesterification step and a polycondensation step, wherein in the transesterification step, at least a manganese compound and a calcium compound are used as a catalyst for transesterification. 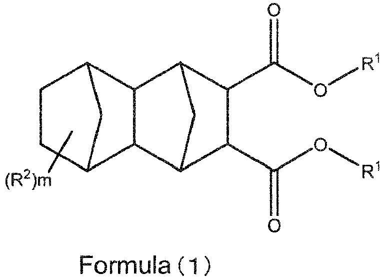 wherein R¹ represents an alkyl group having 1 to 3 carbon atoms, R² represents an alkyl group having 1 to 8 carbon atoms, and m represents an integer of 0 to 8.
<11> The method for producing a polyester resin according to <10> above, wherein a total amount of the catalyst for transesterification used in the transesterification step is 130 ppm or less.
<12> The method for producing a polyester resin according to <10> or <11> above, wherein at least a germanium compound is used as a catalyst for polycondensation reaction in the polycondensation step.
<13> The method for producing a polyester resin according to any of <10> or <12> above, wherein a content of the diol having a linear alkyl structure (C1) is 1 to 20% by mole based on a total amount of the dicarboxylate (A1) represented by the above formula (1), the diol having a cyclic structure (B1) and the diol having a linear alkyl structure (C1).
<14> A resin composition comprising the polyester resin according to any of <1> to <9> above.
<15> A molded article formed by using the polyester resin according to any of <1> to <9> above.
<16> An optical member formed by using the polyester resin according to any of <1> to <9> above.

### Advantageous Effects of Invention

The present invention can provide a polyester resin which can achieve both excellent mechanical properties and formability, a method for producing the same, a resin composition, a molded article and an optical member.

### Description of Embodiments

In the following, embodiments for practicing the present invention (hereinafter simply referred to as "the present embodiment") will be described in detail. The following present embodiments illustrate the present invention for description and do not limit the present invention to the contents below. The present invention may be appropriately modified and practiced within the gist of the present invention.

### <<Polyester resin>>

The polyester resin of the present embodiment comprises a unit derived from dicarboxylate (A) represented by the following formula (1), a unit derived from a diol having a cyclic structure (B) and a unit derived from a diol having a linear alkyl structure (C), and the polyester resin has a molecular weight dispersity (Mw/Mn, where Mw represents the weight average molecular weight and Mn represents the number average molecular weight) of 2.3 to 2.5. Hereinafter, in some cases the above units are simply referred to as the "unit (A)," and the like. 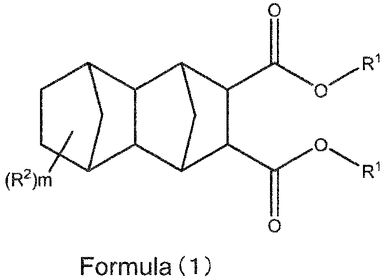 (in the formula (1), R¹ represents an alkyl group having 1 to 3 carbon atoms, R² represents an alkyl group having 1 to 8 carbon atoms, and m represents an integer of 0 to 8).

The polyester resin of the present embodiment comprises a unit derived from a norbornene diol derivative (NBDM) and a specific diol compound such as a diol having a decahydro-1,4,5,8-dimethanonaphthalene ring backbone (hereinafter may be referred to as a "diol having a dinorbornane ring"). The polyester resin has excellent mechanical properties such as strength for the molecular weight. Thus, both excellent mechanical properties such as bending strength, flexural modulus and Tg (heat resistance) and flowability (formability) can be achieved.

Furthermore, when producing a molded article, in most cases polyester resin is generally industrially continuously supplied to the mold to form a molded article. However, if polyester resin remains in the mold when removing the molded article from the mold in the continuous molding process, continuous molding of polyester resin becomes difficult. Thus, usually continuous molding is performed while adjusting temperature, molding speed and the like in consideration of physical properties of the resin to be molded. However, if the resin to be molded has low strength and low flowability, the allowable range of temperature and molding speed is small, and this is disadvantageous for production.

In contrast, the polyester resin of the present embodiment has high heat resistance and strength, and excellent flowability, and thus has excellent continuous formability in a wide range of acceptable temperature and molding speed conditions.

Furthermore, NBDM has been attracting attention as a raw material for optical resin due to its structure. According to the method for producing the polyester resin of the present embodiment, the molecular weight dispersity may be in the range of 2.3 to 2.5 and the total amount of the catalyst used may be reduced by using at least a manganese compound and a calcium compound as a catalyst for transesterification in the transesterification step. Thus, a polyester resin having excellent optical properties in addition to the above mechanical properties and formability can be produced. Therefore, the polyester resin of the present embodiment has properties suitable for optical materials (transparency, birefringence, heat resistance) and can be suitably used as an optical member.

### (Unit derived from dicarboxylic acid)

### - Unit derived from dicarboxylate (A) represented by formula (1) -

The polyester resin of the present embodiment comprises a unit derived from dicarboxylate (A) represented by the formula (1) as the unit derived from dicarboxylic acid: 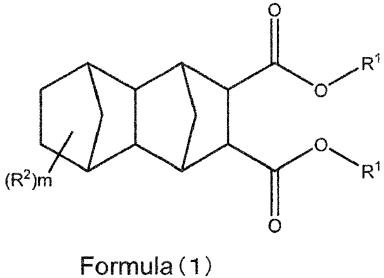 (in the formula (1), R¹ represents an alkyl group having 1 to 3 carbon atoms, R² represents an alkyl group having 1 to 8 carbon atoms, and m represents an integer of 0 to 8).

In the formula (1), R¹ represents an alkyl group having 1 to 3 carbon atoms. Examples of alkyl groups represented by R¹ include, but are not limited to, a methyl group, an ethyl group and a propyl group. A methyl group is preferred from the viewpoint of easiness in transesterification.

In the formula (1), R² represents an alkyl group having 1 to 8 carbon atoms, and preferably an alkyl group having 4 to 8 carbon atoms. The alkyl group represented by R² may be any of a linear, branched and cyclic alkyl groups, and is not particularly limited. Preferred examples thereof include a cyclic alkyl group such as cyclopentane, cyclohexane and norbornane.

In the formula (1), m represents an integer of 0 to 8, and is preferably 0 to 6 from the viewpoint of reactivity.

The dicarboxylic acid (1A) represented by the formula (1) is not particularly limited, and examples thereof include the following compound.

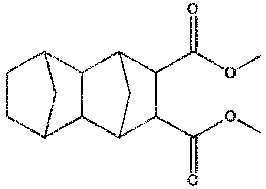

### - Unit derived from another dicarboxylic acid -

The polyester resin of the present embodiment may comprise a unit derived from another dicarboxylic acid in combination with the unit (A). Examples of units derived from other dicarboxylic acids include, but are not limited to, a constituent unit derived from terephthalic acid, isophthalic acid, phthalic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, dimethyl terephthalate, 2-methylterephthalic acid, biphenyldicarboxylic acid, tetralin dicarboxylic acid, succinic acid, glutaric acid, adipic acid, pimelic acid, suberic acid, azelaic acid, sebacic acid, decanedicarboxylic acid, dodecanedicarboxylic acid, cyclohexanedicarboxylic acid, decalindicarboxylic acid, norbornanedicarboxylic acid, tricyclodecanedicarboxylic acid, pentacyclododecanedicarboxylic acid, 3,9-bis(1,1-dimethyl-2-carboxyethyl)-2,4,8,10-tetraoxaspiro[5.5]undecane, 5-carboxy-5-ethyl-2-(1,1-dimethyl-2-carboxyethyl)-1,3-dioxane, dimer acid and the like. A constituent unit derived from at least one selected from terephthalic acid, isophthalic acid, 2,6-naphthalenedicarboxylic acid and 1,4-cyclohexanedicarboxylic acid is preferred from the viewpoint of mechanical strength, heat resistance and availability of the polyester resin. A constituent unit derived from terephthalic acid and isophthalic acid is further preferred from the economical point of view, and dimethyl terephthalate is particularly preferred from the viewpoint of reactivity.

When a unit derived from another dicarboxylic acid is used as these units derived from dicarboxylic acid, the ratio of the above unit (A) is 99% by mole or less, preferably 80% or less, more preferably 60% or less, and particularly preferably 50% or less based on the units derived from dicarboxylic acid.

### (Unit derived from diol)

The polyester resin of the present embodiment comprises a unit derived from a diol having a cyclic structure (B) and a unit derived from a diol having a linear alkyl structure (C), as a unit derived from a diol.

### - Unit derived from diol having cyclic structure (B) -

The unit derived from a diol having a cyclic structure (B) is not particularly limited, and is preferably derived from a diol compound having a cyclic structure in the main backbone. The cyclic structure is not particularly limited, and may be any of a monocyclic structure and a polycyclic structure (including a condensed ring). Furthermore, the cyclic structure may be any of an alicyclic structure, an aromatic ring and a heterocycle. It is preferable that the unit (B) is derived from a diol compound in which each of the two hydroxy groups is bonded to a non-adjacent carbon atom from the viewpoint of efficient synthesis and the like. Examples of units (B) include a diol having an acyclic structure or an aromatic ring, and a bisphenol.

Examples of units derived from a diol having a cyclic structure (B) include i) a unit derived from a diol compound in which the cyclic structure is a polycyclic structure and in which each of the two hydroxy groups is bonded to a different ring; and ii) a unit derived from a diol compound in which the cyclic structure is a monocyclic structure and in which each of the two hydroxy groups is bonded to a non-adjacent carbon atom.

### i) Unit derived from diol in which the cyclic structure is a polycyclic structure and in which each of the two hydroxy groups is bonded to a different ring

As the above unit (B), a diol compound in which the cyclic structure is a polycyclic structure and in which each of the two hydroxy groups is bonded to a different ring may be used. In this regard, the "polycyclic structure" means that there are two or more cyclic structures per molecule, and this includes, for example, a compound having a condensed ring such as a fluorene ring and a norbornene ring. Furthermore, the term "each of the two hydroxy groups is bonded to a different ring" means that each of the two hydroxy groups in a diol compound is bonded to a different ring. In the case of a condensed ring, a hydroxy group is bonded to a different ring constituting the condensed ring, respectively.

Examples of units derived from a diol compound in which the cyclic structure is a polycyclic structure and in which each of the two hydroxy groups is bonded to a different ring include a unit derived from a diol represented by at least one selected from the following formula (A-1) and the following formula (A-2) from the viewpoint of reduction of birefringence in the polyester resin.

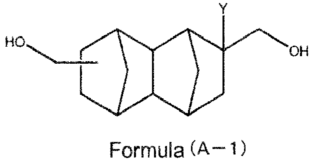

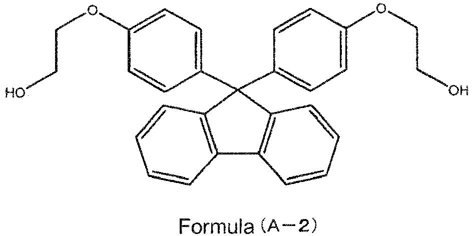

In the formula (A-1), Y is H, CH₃ or C₂H₅. Y is preferably H or CH₃. The diol compound represented by the formula (A-1) may be synthesized according to synthetic examples of monomer described in WO2016/052370 A1.

Other examples of units derived from a diol in which the cyclic structure is a polycyclic structure and in which each of the two hydroxy groups is bonded to a different ring include a unit derived from the following diol.

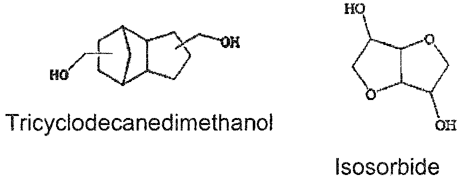

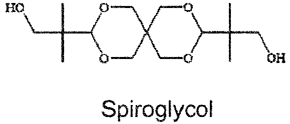

### ii) Diol compound which has a monocyclic structure and in which each of the two hydroxy groups is bonded to a non-adjacent carbon atom

As the above unit (B), a unit derived from a diol compound which has a monocyclic structure and in which each of the two hydroxy groups is bonded to a non-adjacent carbon atom may be used. In this regard, the "monocyclic structure" means that the compound has one cyclic structure per molecule, and does not include a condensed ring. Furthermore, the term "each of the two hydroxy groups is bonded to a non-adjacent carbon atom" means that each of the two hydroxy groups is bonded to a non-adjacent carbon atom not adjacent, and it is particularly preferred that each of the two hydroxy groups is bonded to a carbon atom one or more carbon atoms away in the cyclic structure.

Examples of units derived from a diol which has a monocyclic structure and in which each of the two hydroxy groups is bonded to a non-adjacent carbon atom include a unit derived from the following diol.

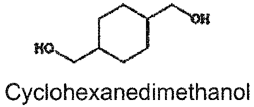

### - Unit derived from diol having linear alkyl structure (C) -

The polyester resin of the present embodiment comprises a unit derived from a diol having a linear alkyl structure (C) together with a unit derived from a diol having a cyclic structure (B) as a unit derived from a diol. The linear alkyl structure included in the unit (C) is not particularly limited, and a linear alkyl structure having 2 to 6 carbon atoms is preferred from the viewpoint of the boiling point. A linear alkyl structure having 2 to 4 carbon atoms is further preferred from the viewpoint of handling properties.

Examples of units (C) include ethylene glycol, propanediol, butanediol, heptanediol and hexanediol. Ethylene glycol, propanediol and butanediol are preferred from the viewpoint of the number of carbon atoms.

The polyester resin of the present embodiment may have a diol structure different from the above units (B) and (C) as a diol constituent unit. Examples of other diol constituent units include a constituent unit derived from for example, a polyether compound.

When a unit derived from another diol is used as these units derived from a diol, the ratio of the total amount of the above units (B) and (C) is 20% by mole or more and 100% by mole or less, preferably 25° by mole and 100% by mole or less, more preferably 30% by mole or more and 100% by mole or less, and particularly preferably 35° by mole or more and 100% by mole or less based on the units derived from a diol.

### (Ratio of each unit)

The molar ratio of the unit (A) to the total amount of the polyester resin of the present embodiment is preferably 20% by mole or more, further preferably 25% by mole or more, and particularly preferably 30% by mole or more from the viewpoint of flowability.

The molar ratio of the unit (B) to the total amount of the polyester resin of the present embodiment is preferably 20% by mole or more, further preferably 25% by mole or more, and particularly preferably 30% by mole or more from the viewpoint of heat resistance.

The molar ratio of the unit (C) to the total amount of the polyester resin of the present embodiment is preferably 1 to 20% by mole, further preferably 5 to 20% by mole, and particularly preferably 5 to 15% by mole or more from the viewpoint of reactivity.

The polyester resin of the present embodiment is mainly composed of the unit (A), the unit (B) and the unit (C). In this regard, "mainly" means that the ratio of the total amount of the diol constituent unit and the dicarboxylic acid constituent unit in all structural units constituting the polyester resin is 70% by mole or more, preferably 80° by mole or more, more preferably 90% by mole or more, and further preferably 100% by mole or more.

The polyester resin of the present embodiment may comprise a unit other than the unit (A), the unit (B) and the unit (C) within the range in which the object of the present embodiment is not impaired. For example, to adjust melt viscoelasticity and molecular weight, the polyester resin may include a unit derived from alcohol, a unit derived from tri- or higher valent alcohol, a unit derived from monocarboxylic acid, a unit derived from polyvalent carboxylic acid, and a unit derived from oxyacid.

Examples of monoalcohols include, but are not limited to, butyl alcohol, hexyl alcohol and octyl alcohol. Examples of tri- or higher valent alcohols include, but are not limited to, trimethylolpropane, glycerol, 1,3,5-pentanetriol and pentaerythritol. Examples of monocarboxylic acids include, but are not limited to, benzoic acid, propionic acid and butyric acid. Examples of polyvalent carboxylic acids include, but are not limited to, trimellitic acid and pyromellitic acid. Examples of oxyacids include, but are not limited to, glycolic acid, lactic acid, hydroxybutyric acid, 2-hydroxyisobutyric acid and hydroxybenzoic acid.

### <Physical properties of polyester resin>

### (Degree of dispersity (Mw/Mn))

The polyester resin of the present embodiment has a molecular weight dispersity (Mw/Mn) of 2.3 to 2.5. When the dispersity is in the above range of 2.3 to 2.5, the polyester resin has high bending strength relative to the weight average molecular weight, and thus both excellent flowability and bending strength can be achieved. The polyester resin has a molecular weight dispersity of further preferably 2.30 to 2.45, and particularly preferably 2.3 to 2.4, which is not particularly limited thereto.

### (Glass transition temperature (Tg))

The glass transition temperature (Tg) of the polyester resin of the present embodiment is not particularly limited, and the polyester resin of the present embodiment has a glass transition temperature (Tg) of preferably 90°C or more, preferably 140°C or more, and particularly preferably 145°C or more from the viewpoint of heat resistance compared to that of PET and the like. The upper limit of the glass transition temperature (Tg) is not particularly limited, and is preferably 180°C or less, preferably 175°C or less, and particularly preferably 170°C or less.

The glass transition temperature may be appropriately measured by a known method, and may be measured in accordance with, for example, the method shown in Examples described later.

### (Weight average molecular weight (Mw), number average molecular weight (Mn))

The polyester resin of the present embodiment has a weight average molecular weight (Mw) of preferably 45,000 to 80,000, more preferably 48,000 to 80,000, and particularly preferably 50,000 to 80,000 from the viewpoint of the strength in moldability, although the weight average molecular weight (Mw) is not particularly limited thereto.

The polyester resin of the present embodiment has a number average molecular weight (Mn) of preferably 18,000 to 32,000, more preferably 20,000 to 33,000, and particularly preferably 21,000 to 34,000 in order to achieve both flowability and strength, although the number average molecular weight (Mn) is not particularly limited thereto.

The number average molecular weight and the weight average molecular weight may be appropriately measured by a known method, and may be measured in accordance with, for example, the method shown in Examples described later.

### (MVR: melt volume rate)

The polyester resin of the present embodiment has a MVR of preferably 20 to 60 cm³/10 minute, more preferably 25 to 50 cm³/10 minute, and particularly preferably 30 to 45 cm³/10 minute from the viewpoint of formability, although MVR is not particularly limited thereto.

MVR may be appropriately measured by a known method, and may be measured in accordance with, for example, the method shown in Examples described later.

### (Flexural modulus, bending strength)

Regarding the polyester resin of the present embodiment, the flexural modulus (MPa) of a molded article is preferably 3,000 MPa or more, more preferably 3,100 MPa or more, and particularly preferably 3,200 MPa or more from the viewpoint of the strength of the molded article, although not particularly limited thereto. The upper limit of the flexural modulus (MPa) is not particularly limited, and is preferably 4,500 MPa or less, and more preferably 4,200 MPa or less from the viewpoint of the formability during forming the film. For example, ethe flexural modulus (MPa) of the molded article is 3,000 MPa or more and 4,500 MPa or less, 3,100 MPa or more and 4,200 MPa or less, or 3,200 MPa or more and 4,200 MPa or less.

Regarding the polyester resin of the present embodiment, the bending strength (MPa) of a molded article is preferably 75 MPa or more, more preferably 80 MPa or more, and particularly preferably 82 MPa or more from the viewpoint of the strength of the molded article, although not particularly limited thereto. The upper limit of the bending strength (MPa) is not particularly limited, and the bending strength (MPa) of the molded article is preferably 150 MPa or less, and more preferably 120 MPa or less. For example, the bending strength (MPa) of the molded article is 75 MPa or more and 150 MPa or less, 80 MPa or more and 120 MPa or less, or 82 MPa or more and 120 MPa or less.

The flexural modulus and the bending strength may be appropriately measured by a known method, and may be measured in accordance with, for example, the method shown in Examples described later.

Furthermore, in the polyester resin of the present embodiment, melt volume flow rate (MVR) / bending strength is preferably 0.5 or more, more preferably 0.51 or more, and particularly preferably 0.52 or more from the viewpoint of an index for flowability relative to strength.

### (Refractive index)

Regarding the polyester resin of the present embodiment, the refractive index (nd) of a molded article is preferably 1.53 to 1.63, more preferably 1.53 to 1.61, and particularly preferably 1.53 to 1.605 from the viewpoint of reduction in the curvature of a lens, although not particularly limited thereto.

The refractive index may be appropriately measured by a known method, and may be measured in accordance with, for example, the method shown in Examples described later.

### (Birefringence)

Regarding the polyester resin of the present embodiment, the birefringence (nm) of a molded article is preferably 100 or less, more preferably 80 or less, and particularly preferably 60 or less from the viewpoint of the performance of the lens unit, although not particularly limited thereto.

The birefringence may be appropriately measured by a known method, and may be measured in accordance with, for example, the method shown in Examples described later.

### (YI value)

The polyester resin of the present embodiment has a YI value of preferably 15 or less, further preferably 10 or less, and particularly preferably 8 or less for the resin to have good hue, as measured by a reflection method according to JIS K7103 using pellets of the polyester resin, which have a thickness of 3 mm.

In the present embodiment, the YI value of the polyester resin may be appropriately for example, by controlling the total amount used of the catalyst for transesterification mentioned above and the amount of the phosphorus compound added.

Furthermore, the YI value may be appropriately measured by a known method, and may be measured in accordance with, for example, the method shown in Examples described later.

### <<Method for producing polyester resin>>

The method for producing the polyester resin of the present embodiment is not particularly limited and a known method may be used, as long as the polyester resin comprises the units (A) to (C) and has a molecular weight dispersity (Mw/Mn, where Mw represents the weight average molecular weight and Mn represents the number average molecular weight) of 2.3 to 2.5. Examples thereof include a melt polymerization method such as transesterification and direct esterification, and a solution polymerization method. A conventionally known catalyst for transesterification, catalyst for esterification, etherification inhibitor, various stabilizers such as a heat stabilizer and a light stabilizer, and polymerization regulator may be used.

Meanwhile, it is preferable to use the method for producing a polyester resin of the present embodiment in order to provide a polyester resin having balanced mechanical properties and flowability (formability) and excellent optical properties such as transparency and birefringence. In the method for producing a polyester resin of the present embodiment (hereinafter may be simply referred to as "the method of the present embodiment"), a dicarboxylate (A1) represented by the above formula (1), a diol having a cyclic structure (B1) and a diol having a linear alkyl structure (C1) are used, and the method comprises at least a transesterification step and a polycondensation step, wherein in the transesterification step, at least a manganese compound and a calcium compound are used as a catalyst for transesterification.

### (Transesterification step)

The method of the present embodiment comprises a transesterification step. The transesterification step is a step of transesterifying a dicarboxylate (A1) represented by the formula (1), a diol having a cyclic structure (B1) and a diol having a linear alkyl structure (C1) in the presence of a catalyst for transesterification.

Known reaction conditions may be used in the transesterification step, and the conditions may include, for example, normal pressure and a temperature of 180 to 260°C (preferably 200°C to 250°C) .

In the transesterification step, the amount of the diol having a linear alkyl structure (C1) added is for example, preferably 1 to 20% by mole, further preferably 3 to 15% by mole and particularly preferably 5 to 10% based on the total amount of the dicarboxylate (A1) represented by the formula (1), the diol having a cyclic structure (B1) and the diol having a linear alkyl structure (C1) (Al + B1 + C1) from the viewpoint of the reactivity of the diol (C1).

In the transesterification step, the molar ratio of the dicarboxylate (A1) to the diol components (diol B1 + diol C1) (All B1 + C1) is for example, preferably 2.0 to 3.0, and further preferably 2.0 to 2.5 from the viewpoint of reactivity.

Furthermore, in the transesterification step, the molar ratio of the diol (B1) to the diol (C1) (B1/C1) is for example, preferably 10/1 to 3/1, and further preferably 10/1 to 6/1 from the viewpoint of reactivity.

In the transesterification step, at least a manganese compound and a calcium compound are used as a catalyst for transesterification. In the method of the present embodiment, by using at least a manganese compound and a calcium compound as a catalyst for transesterification in combination, the resulting polyester resin has a molecular weight dispersity of 2.3 to 2.5, and thus a polyester resin having excellent optical properties in addition to excellent mechanical properties and formability can be produced.

A known catalyst may be appropriately selected and used as a manganese compound used as the catalyst for transesterification. Examples thereof include fatty acid manganese salt such as manganese acetate, manganese carbonate, manganese chloride, acetylacetonato salt of manganese and manganese hydroxide. Manganese acetate tetrahydrate is preferred from the viewpoint of reactivity and availability.

A known catalyst may be appropriately selected and used as a calcium compound used as the catalyst for transesterification. Examples thereof include fatty acid calcium salt such as calcium acetate, calcium carbonate, calcium chloride and calcium hydroxide. Calcium acetate is preferred from the viewpoint of reactivity and availability.

The total amount to be used of the catalyst for transesterification (the sum of the manganese compound and the calcium compound) in the transesterification step is preferably 130 ppm or less, specifically further preferably 60 to 130 ppm, and particularly preferably 60 to 120 ppm from the viewpoint of suppression of coloring and increase in optical properties of the resulting polyester resin.

The molar ratio between the manganese compound (m) and the calcium compound (c) (m/c) in the transesterification step is for example, preferably 2/1 to 4/1, and further preferably 3/1 to 4/1 from the viewpoint of reactivity.

### (Polycondensation step)

The method of the present embodiment comprises a polycondensation step. The polycondensation step is a step of polycondensing the product of the dicarboxylate (A1), the diol (B1) and the diol (C1) prepared in the transesterification step by reducing pressure and increasing the temperature in the presence of a polycondensation catalyst under the reduced pressure. In this step, polymerization reaction proceeds as the moiety derived from the diol (C1) in the product is replaced with the moiety derived from the diol (B1) during polycondensation. The alkyl diol derived from the diol (C1) generated in the above reaction is discharged to the outside of the system.

Known reaction conditions may be appropriately used in the polycondensation step. The reaction temperature in the polycondensation step varies depending on the type and the amount used of the catalyst, and is usually selected in the range of 150°C to 300°C. The reaction temperature is preferably 180°C to 280°C in consideration of the reaction speed and coloring of the resin. The pressure in the reactor is adjusted to finally 1 kPa or less from atmospheric pressure, and adjusted to preferably finally 0.5 kPa or less.

A known polycondensation catalyst used for production of polyester may be appropriately selected and used as a polycondensation catalyst, and the catalyst is selected from the group consisting of germanium, antimony, manganese and titanium.

Examples of catalysts containing germanium include germanium dioxide, germanium tetraoxide, germanium tetramethoxide, germanium tetraethoxide, germanium tetrapropoxide, germanium tetrabutoxide, germanium tetrapentoxide, germanium tetrahexoxide, and germanium dioxide is preferred.

Examples of catalyst containing antimony include antimony trioxide, antimony acetate, antimony tartrate, antimony potassium tartrate, antimony oxychloride, antimony glycolate, antimony pentoxide and triphenyl antimony, and antimony trioxide is preferred.

Examples of catalyst containing titanium include titanium alkoxide such as tetra-n-propyl titanate, tetra-i-propyl titanate, tetra-n-butyl titanate, tetra-n-butyl titanate tetramer, tetra-t-butyl titanate, tetracyclohexyl titanate, tetraphenyl titanate and tetrabenzyl titanate, titanium oxide prepared by hydrolysis of titanium alkoxide, a titanium-silicon and/or zirconium composite oxide prepared by hydrolysis of a mixture of titanium alkoxide and silicon alkoxide and/or zirconium alkoxide, titanium acetate, titanium oxalate, titanium potassium oxalate, titanium sodium oxalate, potassium titanate, sodium titanate, a titanic acid-aluminum hydroxide mixture, titanium chloride, a titanium chloride-aluminum chloride mixture, titanium bromide, titanium fluoride, potassium hexafluorotitanate, cobalt hexafluorotitanate, manganese hexafluorotitanate, ammonium hexafluorotitanate and titanium acetylacetonate. Of them, tetra-n-butyl titanate is preferred.

One polycondensation catalyst may be used or two or more of them may be used. In the present embodiment, antimony and germanium are preferred as the polycondensation catalyst from the viewpoint of increase in the molecular weight of the polyester resin, and germanium is preferred from the viewpoint of suppression of the degradation of color tone of the polyester.

The total amount to be used of the polycondensation catalyst in the polycondensation step is preferably 1,000 ppm or less, specifically further preferably 100 to 900 ppm or less, and particularly preferably 100 to 700 ppm from the viewpoint of suppression of coloring and increase in optical properties of the resulting polyester resin.

When the above polymerization reaction is performed, a phosphorus compound may be added as desired. Examples of phosphorus compounds include, but are not limited to, phosphoric acid, phosphorous acid, phosphate and phosphite. Examples of phosphates include, but are not limited to, methyl phosphate, ethyl phosphate, butyl phosphate, phenyl phosphate, dimethyl phosphate, diethyl phosphate, dibutyl phosphate, diphenyl phosphate, trimethyl phosphate, triethyl phosphate, tributyl phosphate and triphenyl phosphate. Examples of phosphites include methyl phosphite, ethyl phosphite, butyl phosphite, phenyl phosphite, dimethyl phosphite, diethyl phosphite, dibutyl phosphite, diphenyl phosphite, trimethyl phosphite, triethyl phosphite, tributyl phosphite and triphenyl phosphite. One of them may be used alone or two or more of them may be used in combination. The concentration of the phosphorus atom in the polyester resin of the present embodiment is preferably 1 to 500 ppm, more preferably 3 to 400 ppm, and further preferably 5 to 200 ppm. When phosphorus atoms are included at the above concentration, it is likely that a polyester resin with good hue can be obtained and the degree of polymerization can be increased to a sufficient level.

The phosphorus atom mixed in the polyester resin of the present embodiment may be added thereto at any timing during production of the resin. The phosphorus atom may be mixed in the polyester resin, for example, by adding a phosphorus compound to the reaction system at the time of adding raw materials, at the beginning or during transesterification or esterification, or at the beginning, during or at the completion of the polycondensation reaction, although the timing is not particularly limited.

In the production of the polyester resin of the present embodiment, an etherification inhibitor, various stabilizers such as a heat stabilizer and a light stabilizer, a polymerization regulator and the like may be used.

### <<Resin composition>>

The polyester resin of the present embodiment may be used in the form of a resin composition including the polyester resin depending on intended purposes. The resin composition including the polyester resin of the present embodiment may include only one of the polyester resins of the present embodiment, or may include two or more of them.

An additive such as an antioxidant, a light stabilizer, an ultraviolet absorbent, a plasticizer, a bulking agent, a delusterant, a drying regulator, an anti-static agent, an anti-settling agent, a surfactant, a fluidity improver, a drying oil, a wax, a filler, a colorant, a reinforcing agent, a surface leveling agent, a leveling agent and a curing accelerator, and a forming auxiliary may be added to the resin composition to the extent that the effect of the polyester resin of the present invention is not impaired. Only one additive may be included or two or more of them may be included.

Furthermore, a resin such as a different polyester resin, a polyolefin resin, a polyamide resin, a polycarbonate resin, an acrylonitrile resin, a vinyl chloride resin, a vinyl acetate resin, a polyacrylic acid resin, a polymethacrylic acid resin, polystyrene, an ABS resin (an acrylonitrile-butadiene-styrene copolymer resin), a polyimide resin, an AS resin (acrylonitrile-styrene copolymer resin), and an oligomer may be added to the resin composition to the extent that the effect of the polyester resin of the present embodiment is not impaired. Examples of other polyester resins include polyethylene terephthalate and polybutylene terephthalate.

### <<Application of polyester resin>>

The polyester resin of the present embodiment and the composition including the polyester resin may be used in various applications in various forms. For example, they may be used in the form of a molded article. The molded article may be a component or a member.

Examples of applications of the polyester resin of the present embodiment include an injection molded article, an extrusion molded article, a press molded article, an extrusion molded article such as sheet, film and pipe, a bottle, a foam, a pressure sensitive adhesive, an adhesive and a paint. More specifically, an injection molded article may be prepared by any of insert molding and two color molding. The sheet may be a single layer sheet or a multiple layer sheet. The film may also be a single layer film or a multilayer film, an unstretched film or a uniaxially or biaxially stretched film, or a film stacked on a steel plate and the like. A film prepared by inflation molding may also be used. The bottle may be a direct blow bottle, an injection blow bottle or an injection molded bottle. The foam may be foamed beads or an extrusion molded foam.

The polyester resin of the present embodiment is preferably used for an optical member, a product used in vehicles such as an automobile, an import/export packaging material, a food packaging material subjected to retort processing or microwave heating, a container such as a baby bottle and tableware which are heat sterilized, and the like.

The molded article prepared by using the polyester resin of the present embodiment has particularly small refractive index and birefringence, and has excellent transparency with reduced coloring (yellowing) and thus can be suitably used as an optical member. Examples of the optical members include a lens, film, sheet and an automobile headlight.

### Examples

### (Glass transition temperature (Tg))

For the glass transition temperature of the polyester resin, about 10 mg of the polyester resin was put in an unsealed aluminum container and heated to 280°C at a heating rate of 20°C/minute in a nitrogen gas stream (50 ml/minute) to be melted using a differential scanning calorimeter (trade name DSC/TA-60WS made by Shimadzu Corporation), and the resultant was rapidly cooled to give a measurement sample. The sample was measured under the same conditions, and the temperature at which the base line shifted only 1/2 the difference before and after the transition in the DSC curve was determined as the glass transition temperature.

### (Weight average molecular weight (Mw) and number average molecular weight (Mn))

For Mw and Mn of the resulting polyester resin, gel permeation chromatography was performed (GPC: "HLC8320GPC" made by Tosoh Corporation) using tetrahydrofuran as an eluent and standard polystyrene with a known molecular weight (molecular weight distribution = 1) to prepare a calibration curve. Mw and Mn were calculated from the retention time of GPC based on the calibration curve.

### (MVR)

MVR was measured at 260°C by applying a load of 2.16 kg using "MELT INDEXER T-111" made by Toyo Seiki Seisaku-sho, Ltd.

### (Refractive index)

A sample prepared by press molding the resin into a disc with a diameter of 40 mm and a thickness of 3 mm (forming conditions: 200°C, 100 kgf/cm², 2 minutes), and cutting the disc at right angles was measured for the refractive index using a precise refractometer (product name: "KPR-200" made by Kalnew).

### (Birefringence)

The resulting polyester resin was formed into a 100 µm thick film and the film was uniaxially stretched 1.5 times at the glass transition temperature (Tg) + 20°C of the resin. The phase difference of the film after stretching at 600 nm was measured using an ellipsometer (product name: "M-220" made by JASCO Corporation).

### (Flexural modulus, bending strength)

A 80 mm × 10 mm × 3.2 mm specimen was prepared by injection molding, and its flexural modulus and bending strength were measured using Autograph AGS-X (made by Shimadzu Corporation) under conditions of a temperature of 23°C, a relative humidity of 50% and a test rate of 2 mm/ minute.

### (YI)

A 3 mm thick plate was formed by injection molding using the resulting polyester resin. The YI value of the respective samples was measured by using a color difference meter (product name: Color Meter ZE-2000, made by Nippon Denshoku Industries Co., Ltd.).

### (Evaluation of continuous formability)

Continuous molding was performed using an injection molding machine made by FANUC at a cylinder temperature of 280°C and a mold temperature of 130°C while setting the cycle time at 30 seconds.

Cases in which the article was broken when the mold was opened and cases in which the article could not be released from the mold when ejected were regarded as "poor molding," and the number of times of successful continuous molding before poor molding occurred was measured.

Continuous formability was evaluated based on the following criteria.
A: Continuously formed 100 times or more
B: Continuously formed 21 to 99 times
C: Continuously formed 20 times or less

### <Monomer>

The following compounds were used as the monomers.
- NBDM (dicarboxylate (A1)):
   For NBDM, the unsaturated moiety was reduced by the Diels-Alder reaction between cyclopentadiene and dimethyl maleate at 200°C using nickel as a hydrogenation catalyst by a known method to give the following compound.

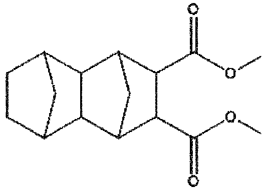

- Diol having cyclic structure (B1):
   D-NDM: (Diol having cyclic structure (B1))

A compound represented by the following formula (1a) was synthesized according to "Synthetic Example of Monomer 1" described in WO2016/052370 A1. The resulting compound was a isomer mixture of a 2,6-isomer (76% by mass) and 2,7-isomer (24% by mass).

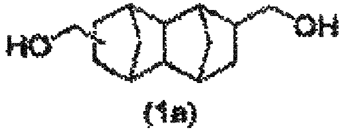

- BPEF: (Diol having cyclic structure (B1))
   9,9-bis[4-(2-hydroxyethoxy)phenyl]fluorene (made by Tokyo Chemical Industry, Co., Ltd.)
- DMT: Dimethyl terephthalate (made by Tokyo Chemical Industry, Co., Ltd.)
- EG: Ethylene glycol

### [Example 1]

203.20 g (0.730 mole) of NBDM, 136.33 g (0.613 mole) of D-NDM, 61.62 g (0.993 mole) of EG and 0.114 g (4.6 × 10⁻⁴ mole) of manganese acetate tetrahydrate and 0.020 g (1.1 × 10⁻⁴ mole) of calcium acetate were put in a 500 mL reactor equipped with a stirrer and a distillator. The temperature in the reactor was increased to 250°C over 3 hours with stirring at atmospheric pressure (760 torr) under nitrogen atmosphere, and the mixture was kept at 250°C for 2 hours while distilling off methanol produced in the reaction to perform transesterification. After the transesterification, 0.081 g (8.2 × 10⁻⁴ mole) of phosphoric acid and 0.302 g (2.9 × 10⁻³ mole) of germanium dioxide were introduced thereinto, and then the temperature in the reactor was started to be increased and the pressure in the reactor was started to be reduced. Polycondensation reaction was performed by increasing the temperature to 275°C over 1 hour and a half and reducing the pressure to 1 Torr while distilling of EG, and then keeping the mixture for 180 minutes to give a polyester resin.

The resulting polyester resin has an Mw of 65,000, Mn of 27,700, and a Tg of 149°C. The resin has a Mw/Mn of 2.35, a MVR of 45, a refractive index of 1.533, a birefringence of 60 nm, a flexural modulus of 3,300 MPa and a bending strength of 85 MPa. The resin has a YI of 11 at a thickness of 3 mm.

### [Examples 2 to 6, Comparative Examples 1 to 2]

A polyester resin was prepared in the respective Examples and Comparative Examples in the same manner as in Example 1 except for changing the type and the amount of the resin used as shown in the following Table 1. The resulting polyester resin was evaluated in the same manner as in Example 1. Furthermore, data of polycarbonate (PC) is shown in Table 1 as Reference Example 1.

### [Example 7]

241.81 g (0.869 mole) of NBDM, 105.23 g (0.730 mole) of CHDM (1,4-cyclohexanedimethanol), 73.33 g (1.182 mole) of EG and 0.114 g (4.6 × 10⁻⁴ mole) of manganese acetate tetrahydrate and 0.040 g (2.3 × 10⁻⁴ mole) of calcium acetate were put in a 500 mL reactor equipped with a stirrer and a distillator. The temperature in the reactor was increased to 250°C over 3 hours with stirring at atmospheric pressure under nitrogen atmosphere, and transesterification was performed while distilling off methanol produced in the reaction. After the transesterification, 0.085 g (8.2 × 10⁻⁴ mole) of phosphoric acid and 0.302 g (2.9 × 10⁻³ mole) of germanium dioxide were introduced thereinto. Then the temperature in the reactor was started to be increased and the pressure in the reactor was started to be reduced, and the temperature was increased to 275°C and the pressure was reduced to 1 Torr over 1 and a half hour, and then the mixture was kept for 180 minutes to give a polyester resin.

The resulting polyester resin has an Mw of 78,000 and a Tg of 115°C. The resin has a Mw/Mn of 2.38, a MVR of 50, a refractive index of 1.522, a flexural modulus of 2,800 MPa and a bending strength of 110 MPa. The resin has a YI of 13 at a thickness of 3 mm.

### [Example 8]

214.62 g (0.771 mole) of NBDM, 127.13 g (0.645 mole) of TCDDM (tricyclodecanedimethanol), 65.09 g (1.049 mole) of EG and 0.100 g (4.1 × 10⁻⁴ mole) of manganese acetate tetrahydrate and 0.020 g (1.1 × 10⁻⁴ mole) of calcium acetate were put in a 500 mL reactor equipped with a stirrer and a distillator. The temperature in the reactor was increased to 250°C over 3 hours with stirring at atmospheric pressure under nitrogen atmosphere, and transesterification was performed while distilling off methanol produced in the reaction. After the transesterification, 0.071 g (7.3 × 10⁻⁴ mole) of phosphoric acid and 0.302 g (2.9 × 10⁻³ mole) of germanium dioxide were introduced thereinto. Then the temperature in the reactor was started to be increased and the pressure in the reactor was started to be reduced, and the temperature was increased to 275°C and the pressure was reduced to 1 Torr over 1 and a half hour, and then the mixture was kept for 180 minutes to give a polyester resin.

The resulting polyester resin has an Mw of 66,000 and a Tg of 125°C. The resin has a Mw/Mn of 2.36, a MVR of 46, a refractive index of 1.526, a flexural modulus of 3,000 MPa and a bending strength of 90 MPa. The resin has a YI of 12 at a thickness of 3 mm.

### [Example 9]

174.01 g (0.625 mole) of NBDM, 159.84 g (0.525 mole) of SPG (spiroglycol: (2,2'-(2,4,8,10-tetraoxaspiro[5.5]undecane-3,9-diyl)bis(2,2-dimethylethanol)), 52.77 g (0.850 mole) of EG and 0.107 g (4.4 × 10⁻⁴ mole) of manganese acetate tetrahydrate and 0.026 g (1.5 × 10⁻⁴ mole) of calcium acetate were put in a 500 mL reactor equipped with a stirrer and a distillator. The temperature in the reactor was increased to 250°C over 3 hours with stirring at atmospheric pressure under nitrogen atmosphere, and transesterification was performed while distilling off methanol produced in the reaction. After the transesterification, 0.076 g (7.8 × 10⁻⁴ mole) of phosphoric acid and 0.302 g (2.9 × 10⁻³ mole) of germanium dioxide were introduced thereinto. Then the temperature in the reactor was started to be increased and the pressure in the reactor was started to be reduced, and the temperature was increased to 275°C and the pressure was reduced to 1 Torr over 1 and a half hour, and then the mixture was kept for 180 minutes to give a polyester resin.

The resulting polyester resin has an Mw of 55,000 and a Tg of 131°C. The resin has a Mw/Mn of 2.38, a MVR of 45, a refractive index of 1.518, a flexural modulus of 3,100 MPa and a bending strength of 80 MPa. The resin has a YI of 9 at a thickness of 3 mm.

### [Example 10]

202.09 g (0.726 mole) of NBDM, 135.59 g (0.610 mole) of D-NDM, 75.14 g (0.987 mole) of PG and 0.100 g (4.1 × 10⁻⁴ mole) of manganese acetate tetrahydrate and 0.020 g (1.1 × 10⁻⁴ mole) of calcium acetate were put in a 500 mL reactor equipped with a stirrer and a distillator. The temperature in the reactor was increased to 250°C over 3 hours with stirring at atmospheric pressure under nitrogen atmosphere, and transesterification was performed while distilling off methanol produced in the reaction. After the transesterification, 0.071 g (7.3 × 10⁻⁴ mole) of phosphoric acid and 0.303 g (2.9 × 10⁻³ mole) of germanium dioxide were introduced thereinto. Then the temperature in the reactor was started to be increased and the pressure in the reactor was started to be reduced, and the temperature was increased to 275°C and the pressure was reduced to 1 Torr over 1 and a half hour, and then the mixture was kept for 180 minutes to give a polyester resin.

The resulting polyester resin has an Mw of 56,000 and a Tg of 146°C. The resin has a Mw/Mn of 2.32, a MVR of 45, a refractive index of 1.533, a flexural modulus of 2,950 MPa and a bending strength of 95 MPa. The resin has a YI of 11 at a thickness of 3 mm.

**[Table 1]**

| | | Type of resin | Example 1 | Example 2 | Example 3 | Example 4 | Example 5 | Example 6 | Example 7 | Example 8 | Example 9 | Example 10 | Comparative Example 1 | Comparative Example 2 | Reference Example 1 |
|---|---|---|---|---|---|---|---|---|---|---|---|---|---|---|---|
| | | | PEs | PEs | PEs | PEs | PEs | PEs | PEs | PEs | PEs | PEs | PEs | PEs | PC |
| Carboxylic acid | mol% | NBDM | 50 | 50 | 50 | 50 | 30 | 30 | 50 | 50 | 50 | 50 | 50 | 50 | |
| | | DMT | | | | | 20 | 20 | | | | | | | |
| Diol | | D-NDM | 42 | 42 | 34 | 44 | 42 | | | | | 42 | 42 | | 100 |
| | | CHDM | | | | | | | 42 | | | | | | |
| | | TCDDM | | | | | | | | 42 | | | | | |
| | | SPG | | | | | | | | | 42 | | | | |
| | | BPEF | | | 8 | | | 42 | | | | | | | |
| | | EG | 8 | 8 | 8 | 6 | 8 | 8 | 8 | 8 | 8 | | 8 | 50 | |
| | | PG | | | | | | | | | | 8 | | | |
| Type of catalyst for transesterification | ppm | Mn | 85 | 70 | 60 | 70 | 50 | 50 | 85 | 75 | 80 | 75 | 85 | 100 | |
| | | Ca | 30 | 15 | 30 | 15 | 15 | 15 | 30 | 15 | 20 | 15 | | | |
| | | Na | | | | | | | | | | | | | 2 |
| Mw | | | 65,000 | 63,000 | 55,000 | 60,000 | 58,000 | 50,000 | 78,000 | 66,000 | 55,000 | 56,000 | 63,000 | Not polymerized | 42,000 |
| Mn | | | 27,700 | 27,300 | 23,000 | 25,900 | 24,900 | 21,300 | 32,800 | 28,000 | 23,100 | 24,100 | 23,900 | | 18,800 |
| Molecular weight dispersity | Mw/Mn | | 2.35 | 2.31 | 2.39 | 2.32 | 2.33 | 2.35 | 2.38 | 2.36 | 2.38 | 2.32 | 2.64 | | 2.23 |
| Refractive index | nd | | 1.533 | 1.533 | 1.551 | 1.532 | 1.540 | 1.605 | 1.522 | 1.526 | 1.518 | 1.533 | 1.533 | | 1.531 |
| Birefringence | nm | | 60 | 58 | 40 | 65 | 85 | 27 | 45 | 57 | 55 | 55 | 60 | | 130 |
| Tg | °C | | 149 | 149 | 150 | 150 | 143 | 146 | 115 | 125 | 131 | 146 | 148 | | 133 |
| MVR | cm3/10 min | | 45 | 48 | 45 | 49 | 45 | 42 | 50 | 46 | 45 | 45 | 55 | | 12 |
| Flexural modulus | MPa | | 3,300 | 3,320 | 3,100 | 3,200 | 3,400 | 3,150 | 2,800 | 3,000 | 3,100 | 2,950 | 2,900 | | 2,300 |
| Bending strength | MPa | | 85 | 82 | 82 | 88 | 90 | 81 | 110 | 90 | 80 | 95 | 71 | | 90 |
| Mw/MVR | | | 1444 | 1313 | 1222 | 1224 | 1289 | 1190 | 1560 | 1435 | 1222 | 1244 | 1145 | | 3500 |
| MVR/ bending strength | | | 0.529 | 0.585 | 0.549 | 0.557 | 0.500 | 0.519 | 0.455 | 0.511 | 0.563 | 0.474 | 0.775 | | 0.133 |
| Continuous productivity | | | A | A | A | A | A | A | A | A | A | A | C | | A |
| YI | 3 mmt | | 11 | 9 | 11 | 10 | 8 | 10 | 13 | 12 | 9 | 11 | 17 | | 4 |

As shown in the table, the polyester resin of each of Examples has both excellent mechanical properties (Tg, flexural modulus, bending strength) and formability (MVR). Furthermore, the polyester resin of each of Examples has excellent optical properties (refractive index, birefringence, YI).

By contrast, the results show that the polyester resin of Comparative Example 1, in which only Mn was used as the catalyst for transesterification and which had a molecular weight dispersity of 2.64, has excellent flowability (NVR), but the resin has low flexural modulus and bending strength for the molecular weight. In Comparative Example 2 in which diol having a cyclic structure was not used, synthesis of the polymer was impossible.

Furthermore, the polyester resin of Comparative Example 1, which had poor flexural modulus and bending strength for the molecular weight, showed poor continuous productivity and high YI value.

The disclosure in Japanese Patent Application No. 2021-164109 filed October 5, 2021 is incorporated herein by reference in its entirety.

All literatures, patent applications and engineering standards shown in the description are incorporated herein by reference with the same effect as if the individual literatures, patent applications and engineering standards were specifically and separately set forth herein that are incorporated by reference.

## Claims

1. A polyester resin comprising:
a unit derived from dicarboxylate (A) represented by the following formula (1),
a unit derived from a diol having a cyclic structure (B), and
a unit derived from a diol having a linear alkyl structure (C),
wherein the polyester resin has a molecular weight dispersity (Mw/Mn, where Mw represents the weight average molecular weight and Mn represents the number average molecular weight) of 2.3 to 2.5: 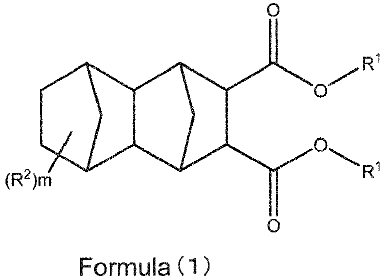
wherein R¹ represents an alkyl group having 1 to 3 carbon atoms, R² represents an alkyl group having 1 to 8 carbon atoms, and m represents an integer of 0 to 8.

2. The polyester resin according to claim 1, wherein the polyester resin has a weight average molecular weight (Mw) of 45,000 to 80,000.

3. The polyester resin according to claim 1, wherein the polyester resin has a melt volume flow rate (MVR) of 20 to 60 cm³/10 minute.

4. The polyester resin according to claim 1, wherein the polyester resin has a bending strength of 75 MPa or more.

5. The polyester resin according to claim 1, wherein the polyester resin has a flexural modulus of 3,000 MPa or more.

6. The polyester resin according to claim 1, wherein, in the unit derived from a diol having a cyclic structure (B), the cyclic structure is a polycyclic structure and each of the two hydroxy groups is bonded to a different ring.

7. The polyester resin according to claim 6, wherein the unit derived from a diol having a cyclic structure (B) is derived from a diol represented by at least one selected from the following formula (A-1) and a the following formula (A-2): 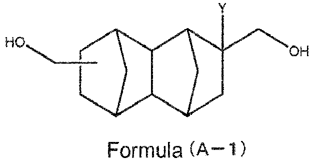 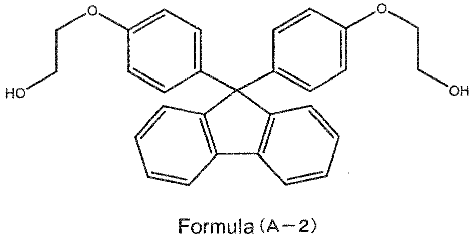 wherein, in the formula (A-1), Y is H, CH₃ or C₂H₅.

8. The polyester resin according to claim 1, wherein, in the unit derived from a diol having a cyclic structure (B), the cyclic structure is a monocyclic structure and each of the two hydroxy groups is bonded to a non-adjacent carbon atom.

9. The polyester resin according to claim 1, wherein, in the unit derived from a diol having a linear alkyl structure (C), the alkyl structure is a linear alkyl structure having 2 to 6 carbon atoms.

10. A method for producing a polyester resin according to any one of claims 1 to 9, using a dicarboxylate (A1) represented by the following formula (1), a diol having a cyclic structure (B1) and a diol having a linear alkyl structure (C1),
the method comprising at least a transesterification step and a polycondensation step, wherein in the transesterification step, at least a manganese compound and a calcium compound are used as a catalyst for transesterification. 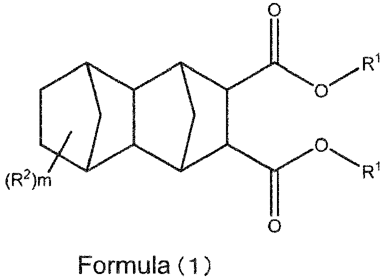 wherein R¹ represents an alkyl group having 1 to 3 carbon atoms, R² represents an alkyl group having 1 to 8 carbon atoms, and m represents an integer of 0 to 8.

11. The method for producing a polyester resin according to claim 10, wherein a total amount of the catalyst for transesterification used in the transesterification step is 130 ppm or less.

12. The method for producing a polyester resin according to claim 10, wherein at least a germanium compound is used as a catalyst for polycondensation reaction in the polycondensation step.

13. The method for producing a polyester resin according to claim 10, wherein a content of the diol having a linear alkyl structure (C1) is 1 to 20% by mole based on a total amount of the dicarboxylate (A1) represented by the above formula (1), the diol having a cyclic structure (B1) and the diol having a linear alkyl structure (C1).

14. A resin composition comprising the polyester resin according to any one of claims 1 to 9.

15. A molded article formed by using the polyester resin according to any one of claims 1 to 9.

16. An optical member formed by using the polyester resin according to any one of claims 1 to 9.
